# EUROPÄISCHE PATENTANMELDUNG

(11) **EP 0 995 553 A2**
(43) Veröffentlichungstag der Anmeldung: **26.04.2000**
(21) Anmeldenummer: 99120605.3
(22) Anmeldetag: 18.10.1999
(51) Int. Cl.: B25F 5/02, B25F 5/00

(54) **Schwingungsgedämpfter Handgriff**

(30) Priorität: 19.10.1998 DE 19848126
(71) Anmelder: Wilhelm Kächele GmbH, Elastomertechnik, 73235 Weilheim/Teck (DE)
(72) Erfinder: Kächele, Bruno, 73235 Weilheim / Teck (DE)
(74) Vertreter: Patentanwälte Rüger, Barthelt & Abel

(57) **Zusammenfassung**

Ein Zusatzhandgriff (1) für Elektrowerkzeuge besteht aus einem im Wesentlichen stangenförmigen Grundkörper (2), auf dem mit Hilfe elastischer Mittel (27, 28) eine Griffhülse (3) befestigt ist. Die elastischen Mittel (27, 28) sind so gewählt, dass sie ein schlechtes Schwingungsübertragungsverhalten zeigen, damit Schwingungen, die von dem Elektrowerkzeug in den Grundkörper (2) des Zusatzhandgriffes (1) eingeleitet werden, nur abgeschwächt an die Griffhülse (3) weitergeleitet werden.

## Beschreibung

Bei handgeführten Elektrowerkzeugen weist das Gehäuse üblicherweise eine Gestalt auf, die einen gehäusefesten Handgriff entstehen lässt. In diesem gehäusefesten Handgriff befindet sich für gewöhnlich der Schalter zum Ein- und Ausschalten des Elektrowerkzeugs.

Bei einer Vielzahl von Anwendungen genügt zum Halten des Elektrowerkzeugs jedoch nicht der gehäusefeste Griff. Es wird ein weiterer Zusatzhandgriff benötigt, um ein sicheres Führen des Elektrowerkzeugs zu gestatten. Als einfachstes Beispiel sei eine Schlagbohrmaschine genannt. Der Zusatzhandgriff wird hierzu an einer Stelle des Gehäuses befestigt, die so dicht wie möglich an der Arbeitsstelle liegt. Die beim Arbeiten auftretenden Vibrationen gelangen über den Zusatzhandgriff unmittelbar in die Hand des Benutzers. Die Vibrationen führen zu einer baldigen Ermüdung und einem Nachlassen des taktilen Gefühls in der Hand.

Besonders kritisch insoweit sind die eingangs erwähnten Schlagbohrmaschinen, pneumatische Bohrhämmer, Winkelschleifer u.dgl.

Die bekannten Zusatzhandgriffe bestehen aus einem rohr- oder hülsenförmigen Kunststoff-Formteil, das an einem Ende mit einem Schutzflansch versehen ist. Auf der Seite mit dem Schutzflansch steht ein Gewindezapfen vor, mit dem der Handgriff an dem Werkzeug befestigt wird. Die Verbindung zwischen der Griffhülse und dem Werkzeug ist somit vollständig starr.

Ausgehend hiervon ist es Aufgabe der Erfindung, einen Handgriff, insbesondere einen Zusatzhandgriff für handgeführte Elektrowerkzeuge zu schaffen, bei dem weniger Schwingungen von dem Elektrowerkzeug auf die Griffhülse übertragen werden.

Diese Aufgabe wird erfindungsgemäß durch einen Handgriff mit den Merkmalen des Anspruches 1 gelöst.

Die Einbringung von elastischen Mitteln zwischen dem Grundkörper und der Griffhülse führt dazu, dass die Schwingungen nicht mehr unmittelbar in die Hand eingeleitet werden können. Die elastischen Mittel sorgen für eine Unterdrückung bzw. bei geeigneter Materialwahl auch für eine Dämpfung bei der Weiterleitung von Schwingungen aus dem Grundkörper in die Griffhülse.

Der Grundkörper weist, wie die zum Stand der Technik gehörenden Handgriffe, ein Befestigungsmittel, beispielsweise in Gestalt des bekannten Gewindezapfens auf, mit dem er an dem Werkzeug anzubringen ist.

Ferner kann an dem Grundkörper ein Werkzeugansatz in Gestalt eines Flachkants, Vierkants oder Sechskants vorhanden sein, um den Grundkörper fest in das Elektrowerkzeug einschrauben zu können. Der Werkzeugansatz kann gleichzeitig als Halterung bei der Montage und dem Zusammenbauen des Handgriffs dienen.

Ein sehr einfacher Grundkörper ist ein im Wesentlichen rotationssymmetrischer Grundkörper, der eine zylindrische Stange aufweist, die sich im montierten Zustand in der Durchgangsöffnung der Griffhülse befindet. Die zylindrische Stange verläuft in der Verlängerung des Gewindezapfens und wird durch den Werkzeugansatz von dem Gewindezapfen getrennt. Sie kann darüber hinaus an ihrem freien Ende ein weiteres Gewinde aufweisen, das der Aufnahme einer Befestigungsmutter dient.

Der Grundkörper ist aus Festigkeitsgründen vorzugsweise ein Metall- bzw. Stahlteil, während die darauf sitzende Hülse ein Kunststoff-Formteil ist. Dieser hat den Vorteil, schneller die Handtemperatur anzunehmen und ist deswegen, abgesehen von der einfacheren Fertigung, auch handsympatischer.

Die Griffhülse ist rohrförmig, so dass eine Durchgangsöffnung entsteht, in die der Grundkörper hineinragt.

Um die Griffhülse in einfacher Weise mit dem Grundkörper zu verbinden, ist die Durchgangsöffnung an wenigstens einem Ende kegelförmig, und zwar so, dass sie sich zum benachbarten Ende der Griffhülse hin erweitert. Auf dem Grundkörper sitzt ein entsprechend komplementärer Kegel, der mit dem Grundkörper einstückig sein kann oder als Kunststoff-Formteil hergestellt und aufgesteckt ist. Die Kegelwinkel der Kegelinnenfläche und des Kegels sind untereinander gleich, was einen Spalt mit über die Länge der Kegel konstanter Spaltweite ergibt. In diesem Spalt liegt das elastische Mittel eingefügt. Das in dem Spalt befindliche elastische Mittel hat die Gestalt einer dicken Kegelfläche und somit in der Abwicklung die Form eines Kreisringsektors.

An dem anderen Ende der Griffhülse kann eine weitere Kegelinnenfläche angeordnet sein, die ähnlich ausgerichtet ist, d.h. die beiden Kegelinnenflächen zeigen mit ihrer Spitze aufeinander zu. Dadurch kann die Griffhülse zwischen zwei auf dem Grundkörper angeordneten Kegeln eingespannt sein. Durch Veränderung der Abstände zwischen den beiden Kegeln des Grundkörpers kann die Vorspannung in den elastischen Mitteln und damit das Schwingungsübertragungsverhalten eingestellt werden.

Die elastischen Mittel bestehen aus einem elastomeren Material, beispielweise Natur- oder Kunstkautschuk. Diese Materialien haben eine gewisse Eigendämpfung, d.h. sie absorbieren die in sie eingeleitete Schwingungsenergie und leiten sie, wenn überhaupt, nur abgeschwächt weiter.

Um eine gute Nachgiebigkeit zu erhalten, bestehen die elastischen Mittel aus einer Trägerplatte, aus der nach wenigstens einer, vorzugsweise nach beiden Seiten, sich Vorsprünge erheben. Diese Vorsprünge können die Außenflächen von in der Trägerplatte enthaltenen Luftkammern sein oder Rippen. Vorzugsweise sind die Vorsprünge voneinander beabstandet und wenigstens einigermaßen regelmäßig verteilt. Im Falle von Rippen verlaufen die Rippen parallel und mit Abstand zueinander, und zwar so, dass sie bei montiertem Handgriff in Umfangsrichtung, bezogen auf die Außenumfangsfläche der Griffhülse verlaufen.

Die Elastizität wird im Falle von Rippen weiter gesteigert, wenn die Rippen auf der einen Seite sich auf der Lücke zwischen benachbarten Rippen der anderen Seite befinden.

Im Übrigen sind Weiterbildungen der Erfindung Gegenstand von Unteransprüchen.

In der Zeichnung sind Ausführungsbeispiele des Gegenstandes der Erfindung dargestellt. Es zeigen:
Fig. 1 einen erfindungsgemäßen Handgriff, in einem Längsschnitt,
Fig. 2 eine der zwischen dem Grundkörper und der Griffhülse eingesetzte Kugelmatten, in einer Draufsicht,
Fig. 3 ein anderes Ausführungsbeispiel des erfindungsgemäßen Handgriffs, in einem Längsschnitt und
Fig. 4 die in dem Handgriff nach Fig. 3 verwendete Rippenmatte, in einer perspektivischen abgebrochenen Darstellung.

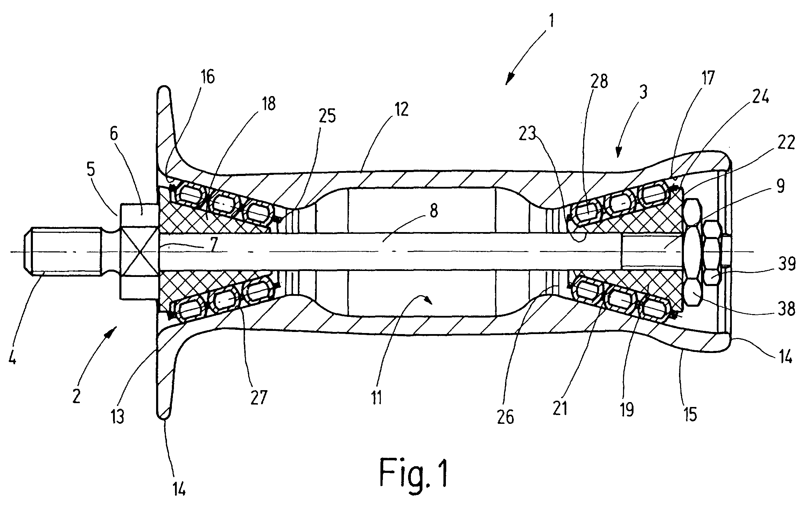

Fig. 1 zeigt in einem Längsschnitt einen Zusatzhandgriff 1 für Elektrowerkzeuge. Zu dem Zusatzhandgriff 1 gehören ein Grundkörper 2 sowie eine auf dem Grundkörper 2 steckende Griffhülse 3.

Der Grundkörper 2 stellt ein längliches aus Stahl bestehendes Bauteil dar und weist an seinem in Fig. 1 linken Ende einen Gewindezapfen 4 auf. Der Gewindezapfen 4 mündet an seinem der Griffhülse 3 zugekehrten Ende in eine plane Schulter 5 ein, die an einem Flansch 6 ausgebildet ist. Der Flansch 6 dient als Werkzeugansatz und hat demgemäß einen regelmäßig vielkantigen Querschnitt, beispielsweise ist er sechskantig.

Eine zu der Schulterfläche 5 parallel verlaufende Schulterfläche 7 ist ebenfalls plan und aus ihrer Mitte ragt eine längliche zylindrische Stange 8 hervor, die an ihrem freien Ende mit einem Gewinde 9 versehen ist.

Der Grundkörper 2 stellt ein einstückiges Stahlteil dar.

Die Griffhülse 3 hingegen ist ein im Wesentlichen rohrförmiges Kunststoff-Formteil mit einer Durchgangsöffnung 11 und einer rotationssymmetrischen Außenumfangsfläche 12, die als Griff-Fläche dient. Die Griffhülse 3 ist länger als die Stange 8, weshalb der Grundkörper 2 lediglich an einem Ende übersteht.

An ihrem in Fig. 1 linken Ende 13, das dem Gewindezapfen 4 benachbart ist, ist die Griffhülse 3 mit einem radial vorstehenden Schutzflansch oder Schutzkragen 14 versehen. An ihrem in Fig. 1 rechten Ende 14 hingegen ist die Griffhülse 3 bei 15 lediglich etwa kegelförmig verdickt, um einen Abrutschschutz für die Hand zu bilden.

Die Durchgangsöffnung 11 geht an ihrem dem Ende 13 benachbarten Ende in eine kegelförmige Erweiterung mit einer kegelförmigen Innenfläche 16 über. Eine dazu komplementäre kegelförmige Erweiterung mit einer Kegelinnenfläche 17 ist an dem anderen Ende 14 vorgesehen. Die beiden Kegelinnenflächen 16 und 17 divergieren jeweils in Richtung auf ihr benachbartes Ende 13, 14 der Griffhülse 3. Bei dem gezeigten Ausführungsbeispiel haben die beiden Kegelinnenflächen 16 und 17 den gleichen Kegelwinkel von ca. 30°. Der Kegelwinkel kann jedoch zwischen etwas mehr als 0° bis 90° variieren.

Um die Griffhülse 3 mit dem Grundkörper 2 zu verbinden, sind zwei Kegelstücke 18 und 19 vorgesehen, die bei dem gezeigten Ausführungsbeispiel untereinander gleiche Kunststoff-Formstücke sind. Die Kegelstücke 18, 19 haben jeweils einen Kegelwinkel, der dem Kegelwinkel der betreffenden Kegelinnenfläche 16 bzw. 17 entspricht. Sie werden von einer Kegelaußenfläche 21 sowie einer planen Basis- oder Grundfläche 22 begrenzt. Durch jedes der Kegelstücke 18, 19 führt jeweils eine zylindrische Bohrung 23 mit einem Durchmesser entsprechend dem Außendurchmesser der zylindrischen Stange 8.

Am Übergangsbereich zwischen der Kegelaußenfläche 21 und der Basisfläche 22 kann schließlich noch eine radial vorspringende Schulter 24 vorgesehen sein.

Im montierten Zustand stecken die beiden Kegelstücke 18, 19, wie gezeigt, auf dem zylindrischen Zapfen 8, wobei ihre spitzen Enden aufeinander zuzeigen.

Da die Außenabmessungen der beiden Kegelstücke 18, 19 kleiner sind als der Raum, der durch die Kegelinnenflächen 16, 17 begrenzt ist, entsteht zwischen jedem Kegelstück 18, 19 und der betreffenden Kegelinnenfläche 16, 17 jeweils ein Spalt 25, 26 mit der Form eines Kegelmantels. In diesem Spalt 25 und 26 befinden sich elastische Mittel 27 und 28.

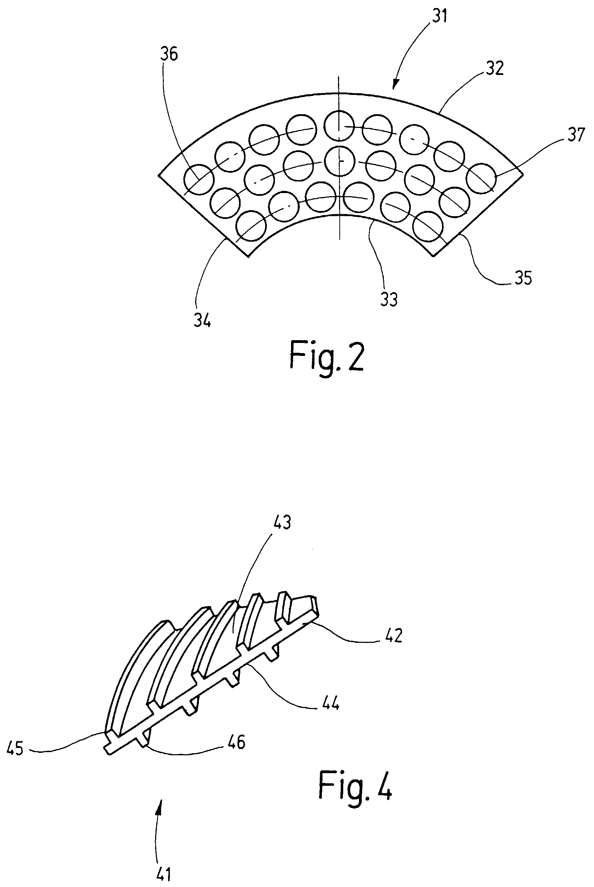

Die beiden elastischen Mittel 27 und 28 sind untereinander gleich und bestehen aus einer Kugelmatte 31 mit entsprechendem Zuschnitt. Die Abwicklung dieser Kugelmatte 31 ist in Fig. 2 in der Draufsicht veranschaulicht. Wie dort zu erkennen ist, hat die Kugelmatte 31 die Gestalt eines Kreisringsektors und wird von zwei zueinander konzentrischen kreisbogenförmig verlaufenden Kanten 32 und 33 sowie zwei geraden, radial verlaufenden Kanten 34 und 35 begrenzt. In der Kugelmatte 31 ist eine Vielzahl von kugelförmigen Luftkammern 36 enthalten, die auf beiden Seiten der Kugelmatte jeweils halbkugelförmige Vorsprünge 37 entstehen lassen. Die Lutkammern 36 haben einen Außendurchmesser von ca. 7 mm.

Das Material, aus dem die Kugelmatte 31 hergestellt ist, ist ein Elastomer, beispielsweise ein Natur- oder Kunstkautschuk, und es hat eine Härte zwischen 20 und 75° Shore. Die Wandstärke der Luftkammern 36 beträgt 0,4 bis 1,5 mm.

Kugelmatten sind zweilagige Gebilde. Jede Lage besteht aus einer Träger- oder Grundfläche, aus der sich hohle Halbkugeln nach jeweils derselben Seite vorwölben. Zwei dieser Lagen werden deckungsgleich miteinander verbunden, so dass sich die hohlen Halbkugeln zu hohlen Vollkugeln ergänzen, deren Innenraum nach außen hermetisch abgedichtet und mit Luft gefüllt ist.

Die Montage des insoweit beschriebenen Zusatzhandgriffes 1 geschieht, indem auf den vorgefertigten Grundkörper 2 zunächst das Kegelstück 18 mit der gezeigten Ausrichtung aufgesteckt wird. In dieser Ausrichtung liegt die Grundfläche 22 des Kegelstücks 18 an der planen Schulter 7 an. Sodann wird eine Kugelmatte 31 in der Durchgangsöffnung 11 der Griffhülse 3 auf der Kegelinnenfläche 16 aufgelegt. Anschließend wird die Griffhülse 3 mit dem Ende 13 voraus auf das Kegelstück 18 aufgesteckt. Sodann wird eine zweite Kugelmatte 31 in den von der Kegelinnenfläche 17 umgrenzten Raum eingelegt und es wird mit der Spitze voraus das Kegelstück 19 eingesteckt. Anschließend werden auf das Gewinde 9 zwei Kontermuttern 38 und 39 oder eine selbstsichernde Mutter aufgeschraubt. Das Maß, wie weit die Mutter 38 aufgeschraubt wird, gibt die Vorspannung vor, mit der die beiden Kugelmatten 31 zwischen den Kegelstücken 18 und 19 und der Griffhülse 3 vorgespannt sind.

Ersichtlicherweise ist bei dem fertig montierten Zusatzhandgriff 1 die Griffhülse 3 schwingelastisch und dämpfend mit dem Grundkörper 2 verbunden. Vibrationen, die von dem Elektrowerkzeug, an dem der beschriebene Zusatzhandgriff angebracht ist, in den Grundkörper 2 eingeleitet werden, gelangen entweder überhaupt nicht oder nur noch abgeschwächt in die Griffhülse 3, da die dazwischen eingefügten Kugelmatten 31 entkoppelnd wirken.

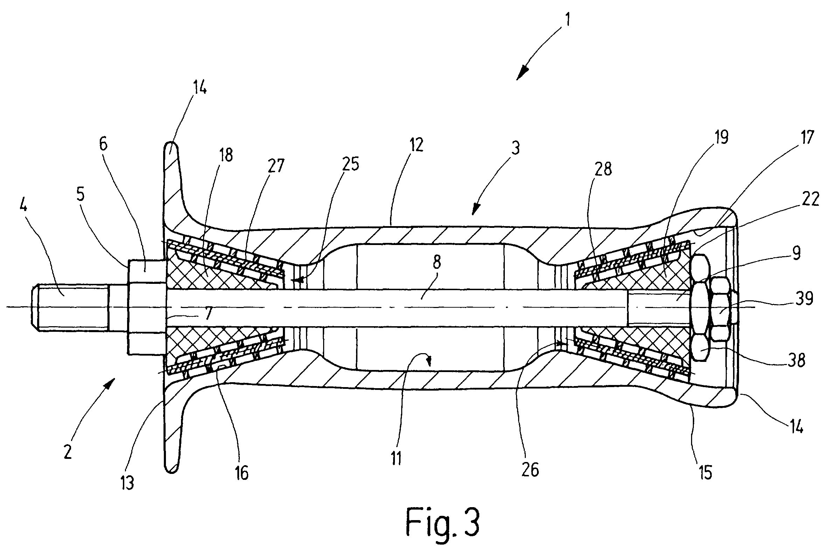

Fig. 3 zeigt ein abgewandeltes Ausführungsbeispiel. Bei dem Zusatzhandgriff 1 nach Fig. 3 sind der Grundkörper 2, die Griffhülse 2 sowie die Kegelstücke 18 und 19 identisch ausgeführt wie bei dem Ausführungsbeispiel nach Fig. 1. Der Unterschied beschränkt sich auf die Gestaltung der elastischen Mittel 27, 28. Anstelle der Kugelmatten 31 werden Rippenmatten 41 verwendet, wie sie in Fig. 4 abgebrochen perspektivisch gezeigt sind.

Die Rippenmatten 41 haben in der Abwicklung und der Draufsicht dieselbe Gestalt wie die Kugelmatten 31. Sie bestehen aus einer massiven planen Trägerfläche 42, die von zwei zueinander parallelen Flachseiten 43 und 44 begrenzt ist. Auf der Flachseite 43 sind mehrere konzentrisch zueinander verlaufende Rippen 45 ausgebildet, die einen rechteckigen Querschnitt haben. Sämtliche Rippen 45 haben denselben Querschnitt und verlaufen im montierten Zustand in Umfangsrichtung des Kegelstücks 18, 19.

An der in Fig. 4 zu erkennenden Unterseite 44 sind ebenfalls mehrere Rippen 46 abgebildet, die wiederum konzentrisch zueinander verlaufen.

Der Abstand zwischen den Rippen 46 ist gleich groß wie der Abstand zwischen den Rippen 45. Allerdings sind die Rippen 45 und 46 nicht aufeinander ausgerichtet, sondern sie sind auf Lücke angeordnet, d.h. jeweils eine Rippe 46 befindet sich mittig in der Lücke zwischen zwei Rippen 45 und umgekehrt.

Es hat sich als zweckmäßig herausgestellt, wenn die Rippenmatte auf der einen Seite fünf Rippen 45 und auf der anderen Seite vier Rippen 46 trägt. Bevorzugte Abmessungen der Rippen 45, 46 sind 1,3 mm Breite und 1,5 mm Höhe; die Stärke der Trägerplatte 42 liegt bei 1,5 mm.

Die Montage des Zusatzhandgriffs 1 nach Fig. 3 ist dieselbe wie im Zusammenhang mit Fig. 1 beschrieben und die Wirkungsweise entsprechend.

Ein Zusatzhandgriff für Elektrowerkzeuge besteht aus einem im Wesentlichen stangenförmigen Grundkörper, auf dem mit Hilfe elastischer Mittel eine Griffhülse befestigt ist. Die elastischen Mittel sind so gewählt, dass sie ein schlechtes Schwingungsübertragungsverhalten zeigen, damit Schwingungen, die von dem Elektrowerkzeug in den Grundkörper des Zusatzhandgriffes eingeleitet werden, nur abgeschwächt an die Griffhülse weitergeleitet werden.

## Patentansprüche

1. Handgriff (1) für handgeführte Elektrowerkzeuge, insbesondere für Vibrationen erzeugende Elektrowerkzeuge,
mit einem Grundkörper (2), der an dem Elektrowerkzeug zu befestigen ist,
mit einer auf dem Grundkörper (2) angeordneten Griffhülse (3), die eine als Grifffläche dienende Außenumfangsfläche (12) aufweist, und
mit elastischen Mitteln (27,28), die zwischen der Griffhülse (3) und dem Grundkörper (2) eingefügt sind, um die Übertragung von Schwingungen von dem Grundkörper (2) auf die Griffhülse (3) zumindest zu mindern.

2. Handgriff nach Anspruch 1, dadurch gekennzeichnet, dass der Grundkörper (2) Befestigungsmittel (4) zum Anbringen des Handgriffs (1) an dem Elektrowerkzeug aufweist.

3. Handgriff nach Anspruch 2, dadurch gekennzeichnet, dass die Befestigungsmittel (4) von einem Gewindezapfen gebildet sind.

4. Handgriff nach Anspruch 1, dadurch gekennzeichnet, dass der Grundkörper (2) einen Werkzeugansatz (6) zum Ansetzen eines Werkzeugs aufweist.

5. Handgriff nach Anspruch 1, dadurch gekennzeichnet, dass der Grundkörper (2) einen länglichen Abschnitt (8) aufweist, auf dem die Griffhülse (3) angeordnet ist.

6. Handgriff nach Anspruch 5, dadurch gekennzeichnet, dass der längliche Abschnitt (8) zumindest zum Teil von einer im wesentliche zylindrischen Stange gebildet ist.

7. Handgriff nach den Ansprüchen 2 und 5, dadurch gekennzeichnet, dass sich der längliche Abschnitt (8) in Verlängerung des Befestigungsmittel (4) erstreckt.

8. Handgriff nach Anspruch 2, dadurch gekennzeichnet, dass der Grundkörper (2) an seinem von dem Befestigungsmittel (4) abliegenden Ende ein Gewinde (9) aufweist.

9. Handgriff nach Anspruch 1, dadurch gekennzeichnet, dass die Griffhülse (3) unter Ausbildung einer Durchgangsöffnung (11) durchgehend rohrförmig ist.

10. Handgriff nach Anspruch 1, dadurch gekennzeichnet, dass die Außenumfangsfläche (12) der Griffhülse (3) in wenigstens einem Abschnitt der Längserstreckung der Griffhülse (3) rotationssymetrisch ist.

11. Handgriff nach Anspruch 1, dadurch gekennzeichnet, dass die Griffhülse (3) an wenigsten einem Ende (13) einen Flansch (14) trägt.

12. Handgriff nach Anspruch 11, dadurch gekennzeichnet, dass der Flansch (14) und die Griffhülse (3) miteinander einstückig sind.

13. Handgriff nach Anspruch 1, dadurch gekennzeichnet, dass die Griffhülse (3) an wenigstens einem Ende (14) einen vergrößerten Durchmesser aufweist.

14. Handgriff nach Anspruch 1, dadurch gekennzeichnet, dass die Durchgangsöffnung (11) sich an wenigstens einem ihrer beiden Enden kegelförmig zum benachbarten Ende (13,14) der Griffhülse (3) hin sich unter Ausbildung einer Kegelinnenfläche (16,17) kegelförmig erweitert.

15. Handgriff nach Anspruch 1, dadurch gekennzeichnet, dass die Durchgangsöffnung (11) an beiden Enden (13,14) mit einer Kegelinnenfläche (16,17) versehen ist und dass die Kegelinnenflächen (16,17) entgegengesetzt gerichtet sind.

16. Handgriff nach Anspruch 1, dadurch gekennzeichnet, dass der Grundkörper (2) wenigstens einen Kegel (18,19) aufweist.

17. Handgriff nach Anspruch 16, dadurch gekennzeichnet, dass der Kegel (18,19) auf den Grundköper (2) aufgesteckt ist.

18. Handgriff nach Anspruch 1, dadurch gekennzeichnet, dass der Kegel (18,19) des Grundkörpers (3) und die Kegelinnenfläche (16,17) denselben Kegelwinkel aufweisen.

19. Handgriff nach Anspruch 1, dadurch gekennzeichnet, dass zwischen dem Kegel (18,19) und der Kegelinnenfläche (16,17) elastische Mittel (27,28) eingefügt sind.

20. Handgriff nach Anspruch 19, dadurch gekennzeichnet, dass die elastischen Mittel (27,18) aus einem Elastomer bestehen.

21. Handgriff nach Anspruch 19, dadurch gekennzeichnet, dass die elastischen Mittel (27,28) eine elastomere Trägerplatte (42) aufweisen, aus der nach wenigstens einer Seite eine Vielzahl von Vorsprüngen (37;45,46) hervorstehen.

22. Handgriff nach Anspruch 21, dadurch gekennzeichnet, dass die Vorsprünge (37;45,46) untereinander im Wesentlichen gleich sind.

23. Handgriff nach Anspruch 22, dadurch gekennzeichnet, dass die Vorsprünge (37;45,46) im Wesentlichen gleichmäßig verteilt angeordnet sind.

24. Handgriff nach Anspruch 23, dadurch gekennzeichnet, dass die Vorsprünge (37) von Luftkammern (36) gebildet sind.

25. Handgriff nach Anspruch 19, dadurch gekennzeichnet, dass die elastomeren Mittel (27,28) von einer Kugelmatte (31) gebildet sind.

26. Handgriff nach Anspruch 23, dadurch gekennzeichnet, dass die Vorsprünge (45,46) von Rippen gebildet sind, die zueinander parallel oder konzentrisch verlaufen und voneinander beabstandet sind.

27. Handgriff nach Anspruch 26, dadurch gekennzeichnet, dass sich die Rippen (45,46) auf der einen Seite der Trägerplatte (42) jeweils auf der Lücke zwischen benachbarten Rippen (45,46) auf der anderen Seite der Trägerplatte (42) befinden.
